# EUROPEAN PATENT APPLICATION

(11) **EP 2 457 805 A1**
(43) Date of publication of application: **30.05.2012**
(21) Application number: 10192602.0
(22) Date of filing: 25.11.2010
(51) Int. Cl.: B62C 3/02

(54) **Cariage provided with a turntable**

(71) Applicant: Chr. van den Heuvel & Zonen B.V., 5554 TS Valkenswaard (NL)
(72) Inventor: van den Heuvel, Henri, 5554 TS, Valkenswaard (NL)
(74) Representative: Verhees, Godefridus Josephus Maria

(57) **Abstract**

A carriage 1 comprises a chassis 3 with a subframe 5 underneath that is rotatably connected to the chassis by means of a fifth wheel 7. The carriage further has two front wheels 9 which are present rotatable around a front axis 13 and are connected to the subframe 5, and two rear wheels 11 which are present rotatable around a rear axis 17 and are connected to the chassis 3. The centre 21 of the fifth wheel is present behind the front axis 13 seen in the direction of movement. As a result, the carriage 1 has a shorter turning circle than a similar carriage on which the centre of the fifth wheel is present on the front axis.

## Description

### Field of the invention.

The invention relates to a carriage comprising a chassis with a seat for a carriage driver, a sub-frame which is connected to the chassis by means of a fifth wheel and to which chassis draught animals are coupled during use, two front wheels which are rotatable around a front axis and are connected to the sub-frame, and two rear wheels which are rotatable around a rear axis and are connected to the chassis.

A carriage is a four-wheeled carriage, drawn by one or more draught animals, usually horses. The animals are usually coupled to the sub-frame by means of a tongue.

The axis may be an imaginary line, for example in the case where the wheels have free suspension or quasi free suspension, or a rigid axle on which the wheels are borne.

### State of the art.

A carriage of this type is generally known. A carriage should be able to drive as closely as possible around an obstacle during contests.

### Summary of the invention.

It is an object of the invention to provide a carriage of the type defined in the opening paragraph with which it is possible to drive as closely as possible around an obstacle. To this end the carriage according to the invention is characterised in that the centre of the fifth wheel, seen in the direction of movement, is present behind the front axis. When negotiating a bend, the outside rear wheel is pushed backwards and the inside rear wheel is pulled forwards as a result of which the rear wheels are actively steering and the carriage has a smaller turning circle than a similar carriage on which the centre of the fifth wheel is present on the front axis.

A reduction of the turning circle which is advantageous in contests is obtained if the centre of the fifth wheel is present between 15% and 35% from the wheelbase of the carriage behind the front axis. The wheelbase is the distance between the front and the rear axis. This means that with a carriage having a 1 metre wheelbase the centre of the fifth wheel is present between 15 and 35 cm behind the front axis. The fifth wheel is preferably present between 20% and 30% from the wheelbase behind the front axis.

### Brief description of the drawings.

The following description relating to the appended drawings, the whole given by way of non-limiting example of the carriage according to the invention, will provide better understanding of how the invention can be realised, in which:
Fig. 1 shows the component parts of the carriage present underneath the chassis in a position for driving straight ahead;
Fig. 2 shows the component parts of the carriage shown in Fig. 1 when a bend is negotiated; and
Fig. 3 shows the positions shown in Figs. 1 and 2 in solid lines and broken lines respectively.

### Detailed description of the drawings.

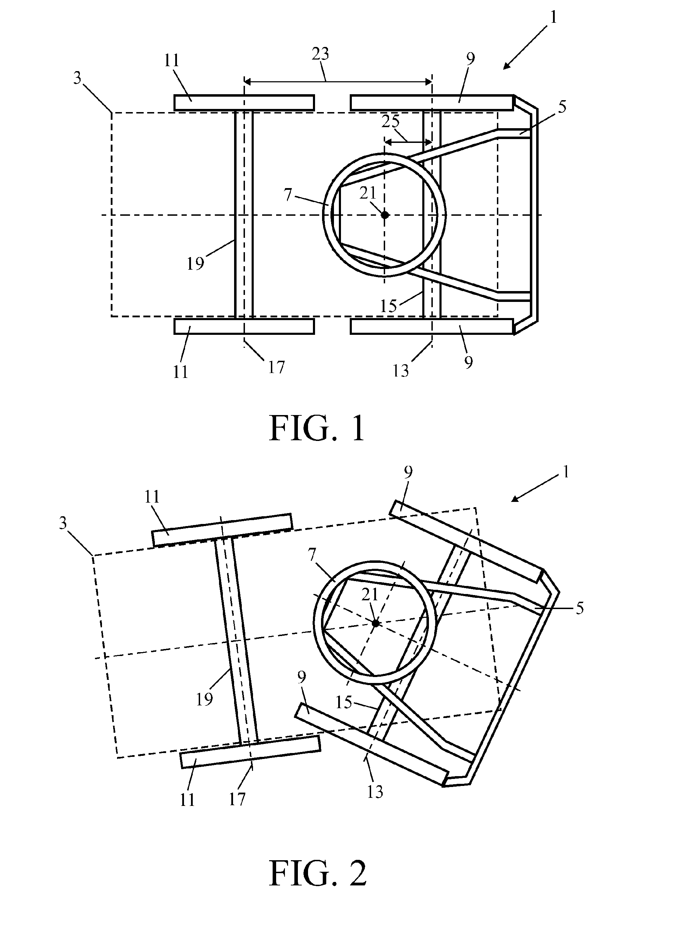

Figs. 1 and 2 show the component parts found underneath the chassis 3 (indicated by broken lines for illustrative purposes) of an embodiment of the carriage 1 according to the invention in a position for driving staright ahead or when a bend is negotiated respectively. A subframe 5 forms part of these component parts, which subframe is rotatably connected to the chassis 3 by means of a fifth wheel 7 and to which draught animals are coupled during use. Furthermore, two front wheels 9 and two rear wheels 11 form part of said component parts. The front wheels 9 are rotatable around a front axis 13. This axis 13 is the axis of a rigid front axle 15 to which the front wheels 9 are connected. The front axle 15 is connected to the subframe 5 by means of a front axle suspension (not shown). The rear wheels 11 are rotatable around a rear axis 17 which is the axis of a rigid rear axle 19 which is connected to the chassis 3 by means of a rear axle suspension (not shown).

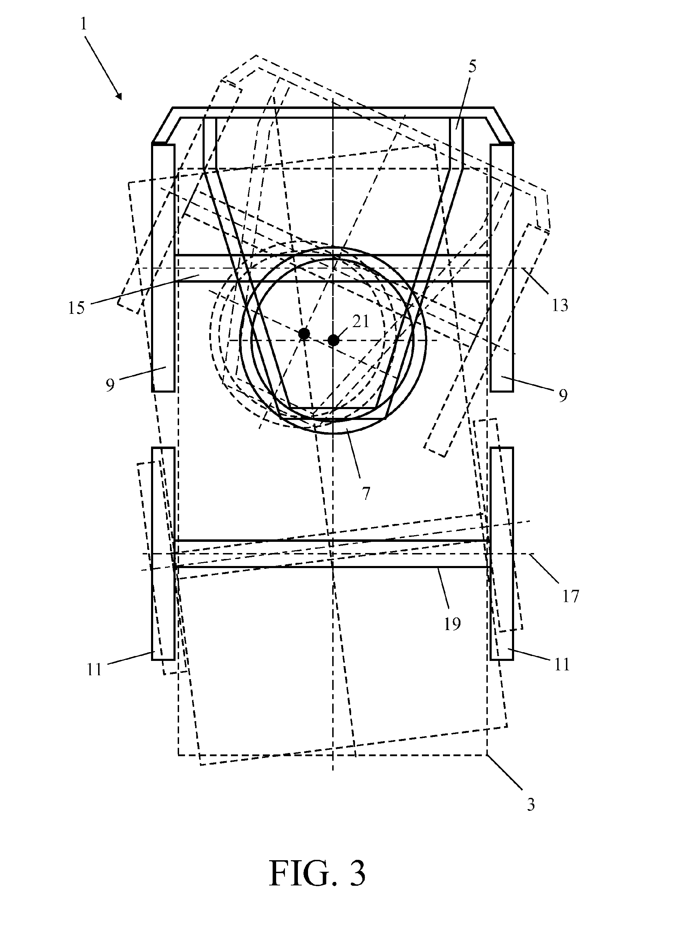

The centre 21 of the fifth wheel 7 is present behind the front axis 13 seen in the direction of movement. When a bend is negotiated, the outside rear wheel is pushed backwards and the inside rear wheel is pulled forwards, see Fig. 3, which represents the positions shown in Figs. 1 and 2 in solid lines and broken lines respectively for illustrative purposes. As a result, the rear wheels 11 are actively steering so that the carriage 1 has a shorter turning circle than a similar carriage on which the centre of the fifth wheel is present on the front axis. The wheelbase 23 of the carriage 1 is 1 metre and the distance 25 between the centre 21 of the fifth wheel and the front axis 13 is 24 cm.

Albeit the invention has been described in the foregoing with reference to the drawings, it should be pointed out that the invention is not by any manner or means restricted to the embodiment shown in the drawings. The invention also extends over any embodiment deviating from the embodiment shown in the drawing Figures within the spirit and scope defined by the claims.

## Claims

1. A carriage comprising a chassis with a seat for a carriage driver, a sub-frame which is connected to the chassis by means of a fifth wheel and to which chassis draught animals are coupled during use, two front wheels which are rotatable around a front axis and are connected to the sub-frame, and two rear wheels which are rotatable around a rear axis and are connected to the chassis, **characterised in that** the centre of the fifth wheel, seen in the direction of movement, is present behind the front axis.

2. A carriage as claimed in claim 1, **characterised in that** the centre of the fifth wheel is present between 15% and 35% from the wheelbase of the carriage behind the front axis.

3. A carriage as claimed in claim 2, **characterised in that** the centre of the fifth wheel is present between 20% and 30% from the wheelbase of the carriage behind the front axis.
